# EUROPEAN PATENT APPLICATION

(11) **EP 4 823 147 A1**
(43) Date of publication of application: **14.10.2026**
(21) Application number: 24906199.5
(22) Date of filing: 11.12.2024
(51) Int. Cl.: H04W 24/02

(54) **MEASUREMENT METHOD AND APPARATUS, COMMUNICATION DEVICE, AND READABLE STORAGE MEDIUM**

(30) Priority: 19.12.2023 CN 202311754264
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100032 (CN); XU, Xiaodong, Beijing 100032 (CN); XIE, Fang, Beijing 100032 (CN)
(74) Representative: GPI Brevets
(86) International application number: PCT/CN2024/138406
(87) International publication number: WO 2025/130716

(57) **Abstract**

Provided are a measurement method and apparatus, a communication device, and a readable storage medium, which pertain to the field of wireless technologies. The measurement method in the embodiments of the present disclosure includes: transmitting, by a UE, first information to a network-side device, and/or receiving, by the UE, second information transmitted by the network-side device; wherein the first information is information related to measurement, and the second information is information related to measurement.

## Description

### CROSS-REFERENCE TO RELATED APPLICATION

The present application claims priority to Chinese Patent Application No. 202311754264.1 filed in China on December 19, 2023, the disclosure of which is incorporated herein by reference in its entirety.

### TECHNICAL FIELD

The present disclosure pertains to the field of wireless technologies, and in particular, to a measurement method and apparatus, a communication device, and a readable storage medium.

### BACKGROUND

In related art, when a User Equipment (UE) performs inter-frequency/inter-cell measurement, measurement gap (MG) is generally required. Within measurement gap length (Measurement Gap Length, MGL) of the measurement gap, the UE disconnects from a current serving frequency and tunes to a target reference signal position to perform measurement. Since how the UE performs measurement within the measurement gap is implemented by the UE, the network does not schedule the UE within the measurement gap. In this case, due to differences in UE processing capabilities, for example, some UEs with stronger capabilities require fewer samples, resulting in that the UE does not perform measurement within some measurement gaps. These unused measurement gaps can actually be scheduled by the network. However, since the network has no information on how the UE performs measurement, the network will not schedule the UE within these unused measurement gaps, which leads to unnecessary throughput loss.

### SUMMARY

An objective of the embodiments of the present disclosure is to provide a measurement method and apparatus, a communication device, and a readable storage medium, so as to solve the problem of unnecessary throughput loss caused by the measurement method in the related art.

To solve the above technical problem, the present disclosure is implemented as follows:
In a first aspect, a measurement method is provided, applied to a UE, including:
transmitting, by a UE, first information to a network-side device, and/or receiving, by the UE, second information transmitted by the network-side device;
wherein the first information is information related to measurement, and the second information is information related to measurement.

In a second aspect, a measurement method is provided, applied to a network-side device, including:
receiving, by a network-side device, first information transmitted by a UE, and/or transmitting, by the network-side device, second information to the UE;
wherein the first information is information related to measurement, and the second information is information related to measurement.

In a third aspect, a measurement apparatus is provided, applied to a UE, including:
a first transceiver module configured to transmit first information to a network-side device, and/or receive second information transmitted by the network-side device; wherein the first information is information related to measurement, and the second information is information related to measurement.

In a fourth aspect, a measurement apparatus is provided, applied to a network-side device, including:
a second transceiver module configured to receive first information transmitted by a UE, and/or transmit second information to the UE; wherein the first information is information related to measurement, and the second information is information related to measurement.

In a fifth aspect, a communication device is provided, including a processor, a memory, and a program or instruction stored on the memory and executable on the processor, wherein the program or instruction, when executed by the processor, implements the steps of the method according to the first aspect or the steps of the method according to the second aspect.

In a sixth aspect, a readable storage medium is provided, storing a program or instruction, wherein the program or instruction, when executed by a processor, implements the steps of the method according to the first aspect or the steps of the method according to the second aspect.

In the embodiments of the present disclosure, the UE may transmit the first information to the network-side device, and/or receive the second information transmitted by the network-side device; the first information is information related to measurement, and the second information is information related to measurement. Thus, measurement gaps not used by the UE for measurement can be utilized for data scheduling, and/or the UE is enabled to perform data transmission and reception within an indicated measurement gap and perform measurement within measurement gap that is not indicated, thereby reducing throughput loss and improving system performance.

### BRIEF DESCRIPTION OF THE DRAWINGS

FIG. 1 is a flowchart of a measurement method provided by an embodiment of the present disclosure;
FIG. 2 is a flowchart of another measurement method provided by an embodiment of the present disclosure;
FIG. 3 is a schematic structural diagram of a measurement apparatus provided by an embodiment of the present disclosure;
FIG. 4 is a schematic structural diagram of another measurement apparatus provided by an embodiment of the present disclosure;
FIG. 5 is a schematic structural diagram of a communication device provided by an embodiment of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are some, but not all, of the embodiments of the present disclosure. All other embodiments obtained by a person of ordinary skill in the art based on the embodiments of the present disclosure without making creative efforts shall fall within the protection scope of the present disclosure.

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, the objects distinguished by "first," "second," and the like are generally of the same type and do not limit the number of the objects. For example, a first object may be one or more. In addition, "and/or" in the specification and claims indicates at least one of the connected objects, and the character "/" generally indicates that the associated objects are in an "or" relationship.

It should be noted that the technologies described in the embodiments of the present disclosure are not limited to a Long Term Evolution (LTE) system or an LTE-Advanced (LTE-A) system, but may also be applied to other wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency Division Multiple Access (SC-FDMA), and other systems. The terms "system" and "network" in the embodiments of the present disclosure are often used interchangeably. The described technologies may be applied not only to the above-mentioned systems and radio technologies, but also to other systems and radio technologies, such as a New Radio (NR) system, a 6th Generation (6G) communication system, and the like.

The measurement method and apparatus, communication device, and readable storage medium provided by the embodiments of the present disclosure will be described in detail below with reference to the accompanying drawings through specific embodiments and their application scenarios.

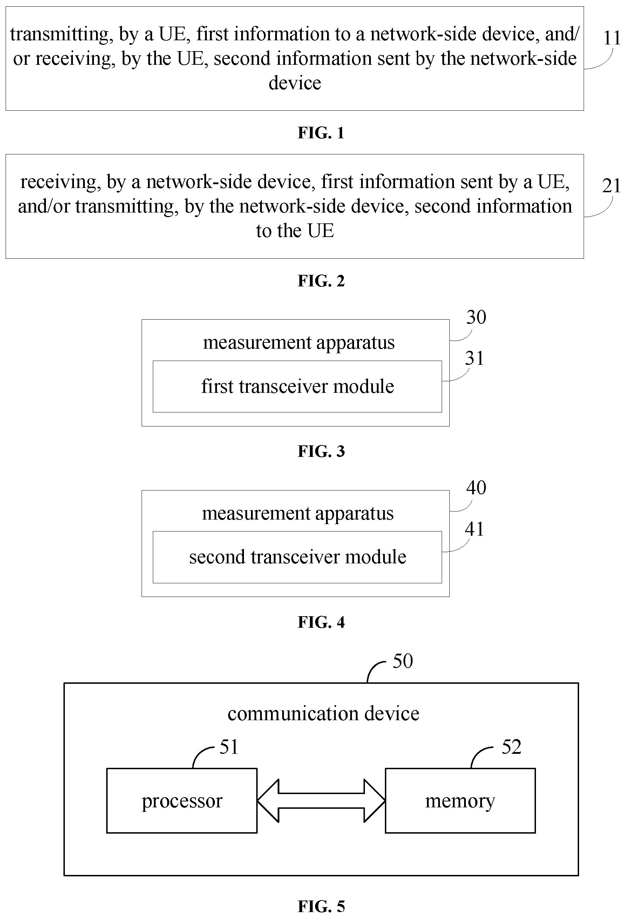

Referring to FIG. 1, which is a flowchart of a measurement method provided by an embodiment of the present disclosure. The method is applied to a UE. As shown in FIG. 1, the method includes the following step.

Step 11: transmitting, by a UE, first information to a network-side device, and/or receiving, by the UE, second information transmitted by the network-side device.

In the embodiments of the present disclosure, the first information is information related to measurement, and the second information is information related to measurement.

Optionally, the solution in the embodiments of the present disclosure can be applied to services such as Extended Reality (XR).

In the embodiments of the present disclosure, by means of measurement-related information reported by the UE to the network-side device via the first information, the network-side device can determine whether data scheduling can be performed within certain measurement gaps, and then can utilize measurement gaps not used by the UE for measurement for data scheduling, thereby reducing throughput loss and improving system performance. For example, typically, a protocol specifies that a UE requires at most P samples to complete measurement of one frequency (if it is measurement gap-based measurement, i.e., at most P measurement gaps are required), but a UE with stronger capability may require only Q (Q<P) samples. At this time, by reporting the information of Q samples to the network-side device via the first information, the network-side device can perform data scheduling within (P-Q) measurement gaps, reducing throughput loss. Data scheduling may include: the UE transmitting Physical Uplink Control Channel (PUCCH), Physical Uplink Shared Channel (PUSCH) and/or Sounding Reference Signal (SRS), and/or the UE receiving Physical Downlink Control Channel (PDCCH), Physical Downlink Shared Channel (PDSCH), and/or Tracking Reference Signal (TRS).

In addition, by means of receiving the second information transmitted by the network-side device, the UE can perform data transmission and reception within indicated measurement gaps and perform measurement within non-indicated measurement gaps, thereby reducing throughput loss and improving system performance.

Optionally, the first information indicates at least one of: a number of measurement gaps, a number of samples, a number of Synchronization Signal Blocks (SSBs), a number of SSB Measurement Timing Configurations (SMTCs).

Optionally, the number of measurement gaps is a number of measurement gaps required for measurement by the UE; the number of samples is a number of samples required for measurement by the UE; the number of SSBs is a number of SSBs required for measurement by the UE; the number of SMTCs is a number of SMTCs required for measurement by the UE. The number of measurement gaps required for measurement by the UE can be described as the number of measurement gaps required by the UE to complete measurement, which can be understood as the number of measurement gaps required to meet measurement accuracy requirements. The number of samples required for measurement by the UE can be described as the number of samples required by the UE to complete measurement, which can be understood as the number of samples required to meet measurement accuracy requirements. The number of SSBs required for measurement by the UE can be described as the number of SSBs required by the UE to complete measurement, which can be understood as the number of SSBs required to meet measurement accuracy requirements. The number of SMTCs required for measurement by the UE can be described as the number of SMTCs required by the UE to complete measurement, which can be understood as the number of SMTCs required to meet measurement accuracy requirements.

As an optional implementation, the first information includes a number of measurement gaps, a number of samples, a number of SSBs and/or a number of SMTCs required for measurement in frequency range (FR) 1, and a number of measurement gaps, a number of samples, a number of SSBs and/or a number of SMTCs required for completing measurement in FR2.

As another optional implementation, the first information indicates at least one of: a number of measurement gaps, a number of samples, a number of SSBs and/or a number of SMTCs required for intra-frequency measurement; a number of measurement gaps, a number of samples, a number of SSBs and/or a number of SMTCs required for inter-frequency measurement; a number of measurement gaps, a number of samples, a number of SSBs and/or a number of SMTCs required for inter-system measurement.

As another optional implementation, the first information includes information at a per-frequency level, for example: a number of measurement gaps, a number of samples, a number of SSBs and/or a number of SMTCs required for measurement of a first frequency, a number of measurement gaps, a number of samples, a number of SSBs and/or a number of SMTCs required for measurement of a second frequency, and so on.

Optionally, the measurement gap in the embodiments of the present disclosure may be configured through Radio Resource Control (RRC), and may include measurement gap period, measurement gap length, an offset, etc.

Optionally, the first information may include at least one of:
indication information of measurement completion within measurement gap length;
indication information of measurement start within measurement gap length.

It can be understood that, in the related art, the network does not schedule data within measurement gap length (MGL), because how the UE performs measurement within the measurement gap length is implementation-specific to the UE, and the network can only avoid data scheduling within the entire measurement gap length. However, since one set of measurement gap configurations is used for measurement of multiple frequencies (or described as measurement targets), and reference signal durations of different frequencies are different, the measurement gap length is set according to the longest reference signal duration in order to measure as many frequencies as possible. As a result, for a frequency point with a shorter reference signal duration, the UE does not need to occupy the entire measurement gap length when performing measurements thereon. By means of the indication information of measurement completion/start within the measurement gap length in this solution, the UE can dynamically indicate whether the network can perform data scheduling in partial regions within the measurement gap length, and can dynamically indicate that, outside the actual start and/or end positions of measurement within the measurement gap length, the UE can still receive network scheduling to perform data transmission and reception, thereby reducing throughput loss.

Optionally, the UE may transmit, within measurement gap length, first information carrying indication information of measurement completion/start within the measurement gap length.

As an optional implementation, if the first information includes the indication information of measurement completion within the measurement gap length, then within the remaining measurement gap length after transmitting the first information, the network may schedule the UE. If the first information includes the indication information of measurement start within the measurement gap length, then before receiving fourth information within the measurement gap length, the network may schedule the UE.

Optionally, the measurement method in the embodiments of the present disclosure may further include at least one of:
transmitting, by the UE, PUCCH, PUSCH, and/or SRS within measurement gap length after a transmitting time of the indication information of measurement completion;
receiving, by the UE, PDSCH, PDCCH, and/or TRS within measurement gap length after the transmitting time of the indication information of measurement completion;
transmitting, by the UE, PUCCH, PUSCH, and/or SRS within measurement gap length before a transmitting time of the indication information of measurement start;
receiving, by the UE, PDSCH, PDCCH, and/or TRS within measurement gap length before the transmitting time of the indication information of measurement start;
transmitting, by the UE, PUCCH, PUSCH, and/or SRS within measurement gap length after the transmitting time of the indication information of measurement completion plus a second duration;
receiving, by the UE, PDSCH, PDCCH, and/or TRS within measurement gap length after the transmitting time of the indication information of measurement completion plus a second duration;
transmitting, by the UE, PUCCH, PUSCH, and/or SRS within measurement gap length before the transmitting time of the indication information of measurement start minus a third duration;
receiving, by the UE, PDSCH, PDCCH, and/or TRS within measurement gap length before the transmitting time of the indication information of measurement start minus a third duration.

It should be noted that the second duration and the third duration may be fixed durations that are pre-configured or specified by a protocol. The second duration and the third duration may be the same or different. The second duration and the third duration are introduced in consideration of signaling transmission delay, UE processing time, base station processing time, etc.

In the embodiments of the present disclosure, the UE may determine the first information according to at least one of:
a processing capability of the UE; different UEs have different processing capabilities (such as baseband, radio frequency, etc.), and the UE may report the required number of measurement gaps, number of samples, number of SSBs and/or number of SMTCs according to its own processing capability;
a channel environment in which the UE is located; wherein, in a scenario with a better channel, the required number of measurement gaps, number of samples, number of SSBs and/or number of SMTCs is relatively small; while in a scenario with a poorer channel, the required number of measurement gaps, number of samples, number of SSBs and/or number of SMTCs increases.

In the embodiments of the present disclosure, the UE may transmit the first information in different situations. The transmitting the first information to the network-side device may include at least one of:
1) transmitting, by the UE, the first information to the network-side device during a connection establishment procedure; i.e., the first information may be transmitted during the connection establishment procedure;
2) transmitting, by the UE, the first information to the network-side device after receiving a measurement object (MO) configuration; i.e., the first information may be transmitted after receiving the MO configuration;
3) transmitting, by the UE, the first information to the network-side device after receiving measurement gap configuration; i.e., the first information may be transmitted after receiving the measurement gap configuration.

Optionally, different manners may be used to trigger reporting of the first information. The transmitting the first information to the network-side device may include at least one of:
(1) transmitting, by the UE, the first information to the network-side device according to a network request; i.e., the UE may transmit the first information to the network-side device after receiving a network request;
(2) autonomously transmitting, by the UE, the first information to the network-side device; for example, as the channel state changes, the number of samples required by the UE to complete measurement changes, and the UE may transmit updated first information at this time.

In the embodiments of the present disclosure, the second information may include at least one of:
measurement gap during which UE performs measurement;
measurement gap during which UE transmits PUCCH, PUSCH, or SRS;
measurement gap during which UE receives PDSCH, PDCCH, or TRS;
usage pattern of the measurement gap.

Optionally, the second information may include an index of measurement gap during which UE performs measurement, wherein the index may be described as a numbering, and the numbering may be a numbering of a plurality of measurement gaps within a period of time.

It should be noted that, for measurement gap indicated by the second information for performing measurement, the UE does not need to perform data transmission/reception during that measurement gap (or described as no scheduling by the network), i.e., the UE may disconnect from the serving cell and tune to other frequencies to perform measurement. For measurement gap indicated by the second information for transmitting PUCCH/PUSCH/SRS, the UE does not perform measurement during that measurement gap, i.e., the UE needs to maintain the connection with the serving cell. For measurement gap indicated by the second information for receiving PDSCH/PDCCH/TRS, the UE does not perform measurement during that measurement gap, i.e., the UE needs to maintain the connection with the serving cell.

Optionally, the second information may include at least one of:
measurement gap during which UE performs measurement within a first time;
measurement gap during which UE transmits PUCCH, PUSCH, or SRS within a first time;
measurement gap during which UE receives PDSCH, PDCCH, or TRS within a first time;
usage pattern of the measurement gap within a first time;
wherein the first time may include at least one of:
   a time for detecting Primary Synchronization Signal (PSS) or Secondary Synchronization Signal (SSS);
   a time for obtaining SSB index;
   a time for measurement;
   a first duration; the first duration may be a fixed duration that is pre-configured or specified by a protocol, and is optionally at least one of 120 milliseconds, 200 milliseconds, 400 milliseconds, 600 milliseconds, 800 milliseconds;
   N times measurement gap period, where N is a non-zero integer.

Here, the time for detecting PSS/SSS, the time for obtaining the SSB index, and the time for measurement may also be collectively referred to as a cell identification time. The time for detecting PSS/SSS may also be described as PSS/SSS detection delay, and its delay length is related to the number of samples, the number of frequencies, the measurement gap period, a Discontinuous Reception (DRX) cycle, etc. The time for obtaining the SSB index may also be described as SSB index acquisition delay, and its delay length is related to the number of samples, the number of frequencies, the measurement gap period, the DRX cycle, etc. The time for measurement may also be described as a measurement delay, and the delay length is related to the number of samples, the number of frequencies, the measurement gap period, the DRX cycle, etc.

In one implementation, the network may indicate measurement gaps within which measurement can be performed within a duration T. For example, there are M measurement gaps within the duration T, and the network specifically indicates which of the M measurement gaps can be used for measurement. In this case, the UE can only perform measurement within these indicated measurement gaps, and needs to receive data scheduling within non-indicated measurement gaps.

In another implementation, the network may indicate measurement gaps during which scheduling can be performed within a duration T. For example, there are M measurement gaps within the duration T, and the network specifically indicates which of the M measurement gaps can be used for data scheduling. In this case, the UE needs to perform transmission and reception during these indicated measurement gaps, and can perform measurement during non-indicated measurement gaps.

In another implementation, the usage pattern of the measurement gap indicates, within a certain time, which measurement gaps can be used for measurement, and/or which measurement gaps need to receive data scheduling. Data scheduling includes receiving PDSCH and/or PDCCH, or transmitting PUSCH and/or PUCCH. The PDSCH, PDCCH, PUSCH, and PUCCH can be related to XR. Assuming there are M measurement gaps within a duration T, the pattern may use N bits for indication, each bit corresponding to one measurement gap. A bit of "1" indicates that the corresponding measurement gap can be used for measurement, and a bit of "0" indicates that the UE needs to receive network scheduling within the corresponding measurement gap, i.e., cannot tune to other frequencies to perform measurement.

In another implementation, a pattern of skipped measurement gaps indicates, within a certain time, which measurement gaps can be skipped (or described as not used for measurement), and/or which measurement gaps need to receive data scheduling. Data scheduling includes receiving PDSCH and/or PDCCH, or transmitting PUSCH and/or PUCCH. The PDSCH, PDCCH, PUSCH, and PUCCH may be related to XR. Assuming there are M measurement gaps within a duration T, the pattern may use N bits for indication, each bit corresponding to one measurement gap. A bit of "1" indicates that the corresponding measurement gap can be skipped, and a bit of "0" indicates that the UE needs to receive network scheduling within the corresponding measurement gap, i.e., cannot tune to other frequencies to perform measurement.

The above duration T may be a measurement delay, which is related to the number of samples, the number of frequencies, the measurement gap period, the DRX cycle, etc., or may be a fixed duration, such as 200 milliseconds, 600 milliseconds, etc., or may be N times the measurement gap period, where N is a non-zero integer.

Optionally, the second information may include a first period, and the first period is measurement period, which may be K times measurement gap period (e.g., Measurement Gap Repetition Period (MGRP)), where K is an integer.

Optionally, the first period is greater than or equal to the period of the measurement gap.

It should be noted that the measurement period can also be described as: a period of measurement gaps used for measurement; or described as: a period of measurement gaps during which the UE performs measurement; or described as: a period of measurement gaps used by the UE for measurement; or described as: a period of measurement gaps actually used by the UE. The period of measurement gaps used for measurement is greater than the previously configured measurement gap period. The previously configured measurement gap period may be a period configured during measurement gap configuration, and may be configured together with the measurement gap length, an offset value, etc.

Thus, by transmitting the period of measurement gaps used for measurement to the UE, throughput loss can be reduced and performance improved. For example, the measurement gap period is t1. When the network learns that the UE has strong capability and will not perform measurement at all measurement gap positions, the network may indicate/configure a period of measurement gaps actually used for the UE, such as t2, where t2 is an integer multiple of t1. For measurement gaps outside the period t2, the UE needs to receive data scheduling, thereby reducing throughput loss.

In the embodiments of the present disclosure, the second information may be determined according to at least one of:
network load;
downlink data packet.

Taking downlink data packet (or described as a throughput requirement) as an example, if the network has a high data requirement during a certain period, the network may require the UE to receive data scheduling within measurement gaps during this period, i.e., not perform measurement, and instruct the UE to perform measurement within measurement gaps outside this period.

Referring to FIG. 2, which is a flowchart of a measurement method provided by an embodiment of the present disclosure. The method is applied to a network-side device. As shown in FIG. 2, the method includes the following step.

Step 21: receiving, by a network-side device, first information transmitted by a UE, and/or transmitting, by the network-side device, second information to the UE.

In the embodiments of the present disclosure, the first information is information related to measurement, and the second information is information related to measurement.

By means of measurement-related information reported by the UE to the network-side device via the first information, the network-side device can determine whether data scheduling can be performed within certain measurement gaps, and then can utilize measurement gaps not used by the UE for measurement for data scheduling, thereby reducing throughput loss and improving system performance. By means of receiving the second information transmitted by the network-side device, the UE can perform data transmission and reception within indicated measurement gaps and perform measurement within non-indicated measurement gaps, thereby reducing throughput loss and improving system performance.

Optionally, the first information indicates at least one of: a number of measurement gaps, a number of samples, a number of SSBs, a number of SMTCs.

Optionally, the number of measurement gaps is a number of measurement gaps required for measurement by the UE; the number of samples is a number of samples required for measurement by the UE; the number of SSBs is a number of SSBs required for measurement by the UE; the number of SMTCs is a number of SMTCs required for measurement by the UE. The number of measurement gaps required for measurement by the UE can be described as the number of measurement gaps required by the UE to complete measurement, which can be understood as the number of measurement gaps required to meet measurement accuracy requirements. The number of measurement gaps required for measurement by the UE can also be described as the number of measurement gaps not used for measurement by the UE, or described as the number of skipped measurement gaps, or described as the number of cancelled measurement gaps, or described as the number of unused measurement gaps. Since the number of measurement gaps within a certain time is known, if the UE reports the number of measurement gaps not used for measurement (spare measurement gap or unoccupied measurement gap), the number of measurement gaps required for measurement can be derived. The number of samples required for measurement by the UE can be described as the number of samples required by the UE to complete measurement, which can be understood as the number of samples required to meet measurement accuracy requirements. The number of SSBs required for measurement by the UE can be described as the number of SSBs required by the UE to complete measurement, which can be understood as the number of SSBs required to meet measurement accuracy requirements. The number of SSBs required for measurement by the UE can also be described as the number of SSBs not used for measurement by the UE, or described as the number of skipped SSBs, or described as the number of unnecessary SSBs. Since the number of SSBs within a certain time is known, if the UE reports the number of SSBs not used for measurement (idle), the number of SSBs required for measurement can be derived. The number of SMTCs required for measurement by the UE can be described as the number of SMTCs required by the UE to complete measurement, which can be understood as the number of SMTCs required to meet measurement accuracy requirements. The number of SMTCs required for measurement by the UE can also be described as the number of SMTCs not used for measurement by the UE, or described as the number of skipped SMTCs, or described as the number of unnecessary SMTCs. Since the number of SMTCs within a certain time is known, if the UE reports the number of SMTCs not used for measurement (idle), the number of SMTCs required for measurement can be derived.

Optionally, the second information indicates at least one of:
measurement gap during which UE performs measurement;
measurement gap during which UE transmits PUCCH, PUSCH, or SRS;
measurement gap during which UE receives PDSCH, PDCCH, or TRS;
usage pattern of the measurement gap.

Optionally, the second information indicates at least one of:
measurement gap during which UE performs measurement within a first time;
measurement gap during which UE transmits PUCCH, PUSCH, or SRS within a first time;
measurement gap during which UE receives PDSCH, PDCCH, or TRS within a first time;
usage pattern of the measurement gap within a first time;
wherein the first time includes at least one of:
   a time for detecting PSS or an SSS;
   a time for obtaining SSB index;
   a time for measurement;
   a first duration; the first duration may be a fixed duration that is pre-configured or specified by a protocol, and is optionally at least one of 120 milliseconds, 200 milliseconds, 400 milliseconds, 600 milliseconds, 800 milliseconds;
   N times measurement gap period, where N is a non-zero integer.

Optionally, the second information includes a first period, and the first period is measurement period.

Optionally, the first period is greater than or equal to the period of the measurement gap.

Optionally, the first information indicates at least one of:
indication information of measurement completion within measurement gap length;
indication information of measurement start within measurement gap length.

By means of the indication information of measurement completion/start within the measurement gap length in the present solution, the UE can dynamically indicate to the network whether data scheduling can be performed in a partial region within the measurement gap, and can dynamically indicate to the network that during a period other than the actual start and/or end positions of measurement within the measurement gap length, the UE can still receive network scheduling for data transmission and reception, thereby reducing throughput loss.

The measurement gap during which UE performs measurement may alternatively be described from an opposite perspective as measurement gap during which UE is not required to perform measurement, or a skipped measurement gap, or a cancelled measurement gap, or measurement gap indicated to be cancelled.

Optionally, the first information is determined according to at least one of:
a processing capability of the UE;
a channel environment in which the UE is located.

Optionally, the receiving the first information transmitted by the UE may include at least one of:
receiving the first information transmitted by the UE during a connection establishment procedure;
receiving the first information transmitted by the UE after receiving a measurement object configuration;
receiving the first information transmitted by the UE after receiving measurement gap configuration.

Optionally, the first information is transmitted according to a network request, or the first information is autonomously transmitted by the UE.

Optionally, the second information is determined according to at least one of:
network load;
downlink data packet.

It should be noted that the execution subject of the measurement method provided in the embodiments of the present disclosure may be a measurement apparatus, or a control module in the measurement apparatus for executing the measurement method. In the embodiments of the present disclosure, the measurement apparatus performing the measurement method is used as an example to illustrate the measurement apparatus provided in the embodiments of the present disclosure.

Referring to FIG. 3, which is a schematic structural diagram of a measurement apparatus provided by an embodiment of the present disclosure. The apparatus is applied to a UE. As shown in FIG. 3, a measurement apparatus 30 includes:
a first transceiver module 31 configured to transmit first information to a network-side device, and/or receive second information transmitted by the network-side device; the first information is information related to measurement, and the second information is information related to measurement.

Optionally, the first information indicates at least one of: a number of measurement gaps, a number of samples, a number of SSBs, a number of SMTCs.

Optionally, the number of measurement gaps is a number of measurement gaps required for measurement by the UE;
the number of samples is a number of samples required for measurement by the UE;
the number of SSBs is a number of SSBs required for measurement by the UE;
the number of SMTCs is a number of SMTCs required for measurement by the UE.

Optionally, the second information indicates at least one of:
measurement gap during which UE performs measurement;
measurement gap during which UE transmits PUCCH, PUSCH, or SRS;
measurement gap during which UE receives PDSCH, PDCCH, or TRS;
usage pattern of the measurement gap.

Optionally, the second information indicates at least one of:
measurement gap during which UE performs measurement within a first time;
measurement gap during which UE transmits PUCCH, PUSCH, or SRS within a first time;
measurement gap during which UE receives PDSCH, PDCCH, or TRS within a first time;
usage pattern of the measurement gap within a first time;
wherein the first time includes at least one of:
   a time for detecting PSS or an SSS;
   a time for obtaining SSB index;
   a time for measurement;
   a first duration; the first duration may be a fixed duration that is pre-configured or specified by a protocol, and is optionally at least one of 120 milliseconds, 200 milliseconds, 400 milliseconds, 600 milliseconds, 800 milliseconds;
   N times measurement gap period, where N is a non-zero integer.

Optionally, the second information includes a first period, and the first period is measurement period.

Optionally, the first period is greater than or equal to the period of the measurement gap.

Optionally, the first information indicates at least one of:
indication information of measurement completion within measurement gap length;
indication information of measurement start within measurement gap length.

Measurement gap during which UE performs measurement within a first time may also be described as measurement gap not used by the UE for measurement within the first time, or as measurement gap skipped by the UE within the first time.

The usage pattern of the measurement gap within a first time may also be described as a pattern of skipped measurement gaps within a first time.

Optionally, the measurement apparatus 30 includes:
a transceiver module configured to perform at least one of:
transmitting PUCCH, PUSCH, and/or SRS within measurement gap length after a transmitting time of the indication information of measurement completion;
receiving PDSCH, PDCCH, and/or TRS within measurement gap length after the transmitting time of the indication information of measurement completion;
transmitting PUCCH, PUSCH, and/or SRS within measurement gap length before a transmitting time of the indication information of measurement start;
receiving PDSCH, PDCCH, and/or TRS within measurement gap length before the transmitting time of the indication information of measurement start;
transmitting PUCCH, PUSCH, and/or SRS within measurement gap length after the transmitting time of the indication information of measurement completion plus a second duration;
receiving PDSCH, PDCCH, and/or TRS within measurement gap length after the transmitting time of the indication information of measurement completion plus a second duration;
transmitting PUCCH, PUSCH, and/or SRS within measurement gap length before the transmitting time of the indication information of measurement start minus a third duration;
receiving PDSCH, PDCCH, and/or TRS within measurement gap length before the transmitting time of the indication information of measurement start minus a third duration.

Optionally, the measurement apparatus 30 further includes:
a determination module configured to determine the first information according to at least one of:
a processing capability of the UE;
a channel environment in which the UE is located.

Optionally, the first transceiver module 31 is specifically configured to perform at least one of:
transmitting the first information to the network-side device during a connection establishment procedure;
transmitting the first information to the network-side device after receiving a measurement object configuration;
transmitting the first information to the network-side device after receiving measurement gap configuration.

Optionally, the first transceiver module 31 is specifically configured to perform at least one of:
transmitting the first information to the network-side device according to a network request;
autonomously transmitting the first information to the network-side device.

Optionally, the second information is determined according to at least one of:
network load;
downlink data packet.

The measurement apparatus 30 in the embodiment of the present disclosure can implement the various processes of the method embodiment shown in FIG. 1 and can achieve the same technical effects. To avoid repetition, details are not repeated herein.

Referring to FIG. 4, which is a schematic structural diagram of a measurement apparatus provided by an embodiment of the present disclosure. The apparatus is applied to a network-side device. As shown in FIG. 4, the measurement apparatus 40 includes:
a second transceiver module 41 configured to receive first information transmitted by a UE, and/or transmit second information to the UE; the first information is information related to measurement, and the second information is information related to measurement.

Optionally, the first information indicates at least one of: a number of measurement gaps, a number of samples, a number of SSBs, a number of SMTCs.

Optionally, the number of measurement gaps is a number of measurement gaps required for measurement by the UE;
the number of samples is a number of samples required for measurement by the UE;
the number of SSBs is a number of SSBs required for measurement by the UE;
the number of SMTCs is a number of SMTCs required for measurement by the UE.

Optionally, the second information indicates at least one of:
measurement gap during which UE performs measurement;
measurement gap during which UE transmits PUCCH, PUSCH, or SRS;
measurement gap during which UE receives PDSCH, PDCCH, or TRS;
usage pattern of the measurement gap.

Optionally, the second information indicates at least one of:
measurement gap during which UE performs measurement within a first time;
measurement gap during which UE transmits PUCCH, PUSCH, or SRS within a first time;
measurement gap during which UE receives PDSCH, PDCCH, or TRS within a first time;
usage pattern of the measurement gap within a first time;
wherein the first time includes at least one of:
   a time for detecting PSS or an SSS;
   a time for obtaining SSB index;
   a time for measurement;
   a first duration; the first duration may be a fixed duration that is pre-configured or specified by a protocol, and is optionally at least one of 120 milliseconds, 200 milliseconds, 400 milliseconds, 600 milliseconds, 800 milliseconds;
   N times measurement gap period, where N is a non-zero integer.

Optionally, the second information includes a first period, and the first period is measurement period.

Optionally, the first period is greater than or equal to the period of the measurement gap.

Optionally, the first information indicates at least one of:
indication information of measurement completion within measurement gap length;
indication information of measurement start within measurement gap length.

Optionally, the first information is determined according to at least one of:
a processing capability of the UE;
a channel environment in which the UE is located.

Optionally, the second transceiver module 41 is specifically configured to perform at least one of:
receiving the first information transmitted by the UE during a connection establishment procedure;
receiving the first information transmitted by the UE after receiving a measurement object configuration;
receiving the first information transmitted by the UE after receiving measurement gap configuration.

Optionally, the first information is transmitted according to a network request, or the first information is autonomously transmitted by the UE.

Optionally, the second information is determined according to at least one of:
network load;
downlink data packet.

The measurement apparatus 40 in the embodiment of the present disclosure can implement the various processes of the method embodiment shown in FIG. 2 and can achieve the same technical effects. To avoid repetition, details are not repeated herein.

Optionally, as shown in FIG. 5, an embodiment of the present disclosure further provides a communication device 50, including a processor 51, a memory 52, and a program or instruction stored on the memory 52 and executable on the processor 51. For example, when the communication device 50 is a UE, the program or instruction, when executed by the processor 51, implements the various processes of the measurement method embodiment shown in FIG. 1 and can achieve the same technical effects. When the communication device 50 is a network-side device, the program or instruction, when executed by the processor 51, implements the various processes of the measurement method embodiment shown in FIG. 2 and can achieve the same technical effects. To avoid repetition, details are not repeated herein.

An embodiment of the present disclosure further provides a readable storage medium storing a program or instruction. The program or instruction, when executed by a processor, can implement the various processes of the above measurement method embodiments and can achieve the same technical effects. To avoid repetition, details are not repeated herein.

A computer-readable medium may include persistent and non-persistent, removable and non-removable media, and may be implemented by any method or technology for information storage. The information may be computer-readable instructions, data structures, program modules, or other data. Examples of the computer storage medium include, but are not limited to, Phase-Change Random Access Memory (PRAM), Static Random-Access Memory (SRAM), Dynamic Random-Access Memory (DRAM), other types of Random Access Memory (RAM), Read-Only Memory (ROM), Electrically Erasable Programmable Read-Only Memory (EEPROM), flash memory or other memory technologies, Compact Disc Read-Only Memory (CD-ROM), Digital Video Disc (DVD) or other optical storage, magnetic cassettes, magnetic tape, magnetic disk storage or other magnetic storage devices, or any other non-transmission medium that can be used to store information accessible by a computing device. According to the definition herein, the computer-readable medium does not include transitory media, such as modulated data signals and carrier waves.

It should be noted that, in the present disclosure, the terms "include," "including," or any other variants thereof are intended to cover a non-exclusive inclusion, such that a process, method, article, or apparatus that includes a list of elements not only includes those elements, but also includes other elements not expressly listed or inherent to such process, method, article, or apparatus. In the absence of further limitations, an element defined by the phrase "including a ..." does not exclude the presence of additional identical elements in the process, method, article, or apparatus that includes the element.

The serial numbers of the embodiments of the present disclosure are merely for description purposes and do not represent the superiority or inferiority of the embodiments.

Through the description of the foregoing implementations, those skilled in the art can clearly understand that the method in the foregoing embodiments may be implemented by means of software in combination with a necessary general-purpose hardware platform, or may alternatively be implemented by hardware, although in many cases the former is a preferred implementation. Based on such understanding, the technical solutions of the present disclosure essentially or the part contributing to the prior art, may be embodied in the form of a software product. The computer software product is stored in a storage medium (such as ROM/RAM, a magnetic disk, or an optical disc), and includes several instructions for enabling a service classification device (which may be a mobile phone, a computer, a server, an air conditioner, or a network device, etc.) to perform the methods described in the embodiments of the present disclosure.

The foregoing descriptions are merely preferred embodiments of the present disclosure. It should be noted that various improvements and modifications may be made by those of ordinary skill in the art without departing from the principles of the present disclosure, and such improvements and modifications shall also fall within the protection scope of the present disclosure.

## Claims

1. A measurement method, comprising:
transmitting, by a User Equipment (UE), first information to a network-side device, and/or receiving, by the UE, second information transmitted by the network-side device;
wherein the first information is information related to measurement, and the second information is information related to measurement.

2. The method according to claim 1, wherein the first information indicates at least one of: a number of measurement gaps, a number of samples, a number of Synchronization Signal Blocks (SSBs), a number of SSB Measurement Timing Configurations (SMTCs).

3. The method according to claim 2, wherein:
the number of measurement gaps is a number of measurement gaps required for measurement by the UE;
the number of samples is a number of samples required for measurement by the UE;
the number of SSBs is a number of SSBs required for measurement by the UE;
the number of SMTCs is a number of SMTCs required for measurement by the UE.

4. The method according to claim 1, wherein the second information indicates at least one of:
measurement gap during which UE performs measurement;
measurement gap during which UE transmits Physical Uplink Control Channel (PUCCH), Physical Uplink Shared Channel (PUSCH), or Sounding Reference Signal (SRS);
measurement gap during which UE receives Physical Downlink Shared Channel (PDSCH), Physical Downlink Control Channel (PDCCH), or Tracking Reference Signal (TRS);
usage pattern of the measurement gap.

5. The method according to claim 1, wherein the second information indicates at least one of:
measurement gap during which UE performs measurement within a first time;
measurement gap during which UE transmits PUCCH, PUSCH, or SRS within a first time;
measurement gap during which UE receives PDSCH, PDCCH, or TRS within a first time;
usage pattern of the measurement gap within a first time;
wherein the first time comprises at least one of:
a time for detecting Primary Synchronization Signal (PSS) or Secondary Synchronization Signal (SSS);
a time for obtaining SSB index;
a time for measurement;
a first duration;
N times measurement gap period, where N is a non-zero integer.

6. The method according to claim 1, wherein the second information comprises a first period, and the first period is measurement period.

7. The method according to claim 6, wherein the first period is greater than or equal to a period of measurement gap.

8. The method according to claim 1 or 2, wherein the first information indicates at least one of:
indication information of measurement completion within measurement gap length;
indication information of measurement start within measurement gap length.

9. The method according to claim 8, further comprising at least one of:
transmitting, by the UE, PUCCH, PUSCH, and/or SRS within measurement gap length after a transmitting time of the indication information of measurement completion;
receiving, by the UE, PDSCH, PDCCH, and/or TRS within measurement gap length after the transmitting time of the indication information of measurement completion;
transmitting, by the UE, PUCCH, PUSCH, and/or SRS within measurement gap length before a transmitting time of the indication information of measurement start;
receiving, by the UE, PDSCH, PDCCH, and/or TRS within measurement gap length before the transmitting time of the indication information of measurement start;
transmitting, by the UE, PUCCH, PUSCH, and/or SRS within measurement gap length after the transmitting time of the indication information of measurement completion plus a second duration;
receiving, by the UE, PDSCH, PDCCH, and/or TRS within measurement gap length after the transmitting time of the indication information of measurement completion plus a second duration;
transmitting, by the UE, PUCCH, PUSCH, and/or SRS within measurement gap length before the transmitting time of the indication information of measurement start minus a third duration;
receiving, by the UE, PDSCH, PDCCH, and/or TRS within measurement gap length before the transmitting time of the indication information of measurement start minus a third duration.

10. The method according to claim 2 or 3, further comprising:
determining, by the UE, the first information according to at least one of:
a processing capability of the UE;
a channel environment in which the UE is located.

11. The method according to claim 1, wherein the transmitting the first information to the network-side device comprises at least one of:
transmitting, by the UE, the first information to the network-side device during a connection establishment procedure;
transmitting, by the UE, the first information to the network-side device after receiving a measurement object configuration;
transmitting, by the UE, the first information to the network-side device after receiving measurement gap configuration.

12. The method according to claim 1, wherein the transmitting the first information to the network-side device comprises at least one of:
transmitting, by the UE, the first information to the network-side device according to a network request;
autonomously transmitting, by the UE, the first information to the network-side device.

13. The method according to claim 4 or 5, wherein the second information is determined according to at least one of:
network load;
downlink data packet.

14. A measurement method, comprising:
receiving, by a network-side device, first information transmitted by a UE, and/or transmitting, by the network-side device, second information to the UE;
wherein the first information is information related to measurement, and the second information is information related to measurement.

15. The method according to claim 14, wherein the first information indicates at least one of:
a number of measurement gaps, a number of samples, a number of Synchronization Signal Blocks (SSBs), a number of SSB Measurement Timing Configurations (SMTCs).

16. The method according to claim 15, wherein:
the number of measurement gaps is a number of measurement gaps required for measurement by the UE;
the number of samples is a number of samples required for measurement by the UE;
the number of SSBs is a number of SSBs required for measurement by the UE;
the number of SMTCs is a number of SMTCs required for measurement by the UE.

17. The method according to claim 14, wherein the second information indicates at least one of:
measurement gap during which UE performs measurement;
measurement gap during which UE transmits Physical Uplink Control Channel (PUCCH), Physical Uplink Shared Channel (PUSCH), or Sounding Reference Signal (SRS);
measurement gap during which UE receives Physical Downlink Shared Channel (PDSCH), Physical Downlink Control Channel (PDCCH), or Tracking Reference Signal (TRS);
usage pattern of the measurement gap.

18. The method according to claim 14, wherein the second information indicates at least one of:
measurement gap during which UE performs measurement within a first time;
measurement gap during which UE transmits PUCCH, PUSCH, or SRS within a first time;
measurement gap during which UE receives PDSCH, PDCCH, or TRS within a first time;
usage pattern of the measurement gap within a first time;
wherein the first time comprises at least one of:
a time for detecting Primary Synchronization Signal (PSS) or Secondary Synchronization Signal (SSS);
a time for obtaining SSB index;
a time for measurement;
a first duration;
N times measurement gap period, where N is a non-zero integer.

19. The method according to claim 14, wherein the second information comprises a first period, and the first period is measurement period.

20. The method according to claim 14 or 15, wherein the first information indicates at least one of:
indication information of measurement completion within measurement gap length;
indication information of measurement start within measurement gap length.

21. The method according to claim 14 or 15, wherein the first information is determined according to at least one of:
a processing capability of the UE;
a channel environment in which the UE is located.

22. The method according to claim 14, wherein the receiving the first information transmitted by the UE comprises at least one of:
receiving, by the network-side device, the first information transmitted by the UE during a connection establishment procedure;
receiving, by the network-side device, the first information transmitted by the UE after receiving a measurement object configuration;
receiving, by the network-side device, the first information transmitted by the UE after receiving measurement gap configuration.

23. The method according to claim 14, wherein the first information is transmitted according to a network request, or the first information is autonomously transmitted by the UE.

24. The method according to claim 17 or 18, wherein the second information is determined according to at least one of:
network load;
downlink data packet.

25. A measurement apparatus, comprising:
a first transceiver module configured to transmit first information to a network-side device, and/or receive second information transmitted by the network-side device; wherein the first information is information related to measurement, and the second information is information related to measurement.

26. A measurement apparatus, comprising:
a second transceiver module configured to receive first information transmitted by a UE, and/or transmit second information to the UE; wherein the first information is information related to measurement, and the second information is information related to measurement.

27. A communication device, comprising a processor, a memory, and a program or instruction stored on the memory and executable on the processor, wherein the program or instruction, when executed by the processor, implements the steps of the measurement method according to any one of claims 1 to 13, or implements the steps of the measurement method according to any one of claims 14 to 24.

28. A readable storage medium storing a program or instruction, wherein the program or instruction, when executed by a processor, implements the steps of the measurement method according to any one of claims 1 to 13, or implements the steps of the measurement method according to any one of claims 14 to 24.
